(19)

**Europäisches Patentamt**
**European Patent Office**
**Office européen des brevets**

(11) **EP 4 786 971 A1**

(12) **EUROPEAN PATENT APPLICATION**

(43) Date of publication:
05.08.2026 Bulletin 2026/32

(21) Application number: 25382056.7

(22) Date of filing: 30.01.2025

(51) International Patent Classification (IPC):
**G01N 29/04** (2006.01)      **G01N 29/34** (2006.01)
**G01N 29/44** (2006.01)

(52) Cooperative Patent Classification (CPC):
**G01N 29/4481; G01N 29/04; G01N 29/348;**
**G01N 29/4427; G01N 29/449;** G01N 2291/2698

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Fundacio Privada Universitat**
**I Tecnologia (Funitec)**
**08022 Barcelona (ES)**

(72) Inventors:
• **ARNELA COLL, Marc**
**08022 BARCELONA (ES)**
• **SOCORÓ CARRIÉ, Joan Claudi**
**08022 BARCELONA (ES)**
• **VIDAÑA VILA, Ester**
**08022 BARCELONA (ES)**

(74) Representative: **Ungria López, Javier**
**Avda. Ramón y Cajal, 78**
**28043 Madrid (ES)**

(54) **A SYSTEM AND METHOD FOR AN AUTOMATIC CLASSIFICATION OF RECYCLABLE CONTAINERS**

(57) The present invention discloses a system (1) and a method for an automatic classification of recyclable containers. The system comprises: a receptacle (2) for holding a recyclable container (3); a computing unit (4); a loudspeaker (5) for generating ultrasonic (50) and/or audible sound waves (51); microphones (7) for capturing the sound waves. The computing unit is configured to generate signal: an exponential sine sweep (ESS) in the audible range, an ESS in the ultrasonic range, or an audible ESS and modulate it to the ultrasonic range; send the signal to the loudspeaker; measure the sound waves and compute the acoustic impulse responses (52); post-processing the acoustic impulse responses; classify the type of recyclable container using Machine Learning, trained using a training dataset. The training dataset includes acoustic impulse responses of recyclable containers to ultrasonic and/or audible sound waves, and types of recyclable containers issued from a classification test.

**FIG. 2**

EP 4 786 971 A1

**Description**

**FIELD AND OBJECT OF THE INVENTION**

The present invention discloses a system and method for an automatic classification of recyclable containers. It is also disclosed a Reverse Vending Machines using the system and method for an automatic classification of recyclable containers.

Reverse vending machines "RVMs" are essential for promoting waste sorting at the source by offering incentives for recycling. However, current RVMs, which primarily rely on expensive sensors such as barcode scanners and computer vision systems, face limitations including unreadable barcodes, high computational demands, and sensitivity to environmental conditions like lighting.

The present invention discloses an alternative, cost-effective approach using acoustic sensors for automatic waste classification, aiming to reduce the production cost of RVMs. The proposed method consists of emitting ultrasonic and/or acoustic sound waves towards the recyclable object and, by analysing the variations in the acoustic field, an artificial intelligence system classifies the material. For doing so, the system uses the ultrasonic and audible impulse response of each item, measured using the exponential sine sweep "ESS" technique. To validate this approach, a proof-of-concept was developed and tested in a controlled environment using a scaled replica of a reverberation chamber, designed to achieve ideal acoustic conditions. Acoustic impulse responses were captured using ESS emitted by an omnidirectional parametric loudspeaker "OPL", which generates both ultrasonic and audible sound waves via the parametric acoustic array (PAA) effect. This setup allowed for simultaneous collection of ultrasonic and audible impulse responses for each recyclable item. The collected acoustic data were then used to train classical machine learning and deep learning models to classify the introduced material, specifically plastic, glass, cardboard, and cans. Initial results show promising classification accuracy, demonstrating the potential of this acoustic technology for broader application in RVMs.

**BACKGROUND OF THE INVENTION**

People who currently recycle must manually classify products at home following a criterion that, despite being well-defined by public entities, is rarely met in practice. Recycle rates are far from those that would be desirable, and they should be improved if we want to move to a production and consumption model based on the circular economy. This is a requirement not only from the European Commission but also from the United Nations through the Sustainable Development Goal 12 about sustainable production and consumption. A device for proper waste sorting at the source would be extremely helpful to that goal.

Reverse vending machines (RVM) may play a key role in improving waste sorting at the source. These are smart machines that collect empty and recyclable containers from users, typically glass bottles, plastic bottles, aluminium cans, and cardboard packaging, and give out in exchange a reward - money or store credits - which encourages people to recycle. These machines are typically equipped with various sensors, including near-infrared sensors, barcode sensors, weight sensors and even cameras [T. Yoo, S. Lee, T. Kim, Dual image-based cnn ensemble model for waste classification in reverse vending machine, Applied Sciences 11 (22) (2021) 11051. doi:https://doi.org/10.3390/app112211051], to automatically classify the recycling packaging waste. The most extended RVMs are those based on barcode reading, although they fail when the barcode is damaged or is simply not readable. Systems based on computer vision are attracting attention to improve the performance of existing machines. They capture a set of images from the introduced recyclable item and feed them into a machine-learning system for waste sorting. However, these approaches involve high computational complexity and require a large amount of training data. Also, computer vision strategies depend heavily on the surrounding environment and would fail due to the variance of item fullness, deformation conditions and illumination changes (e.g., night-time) [G. Lu, Y. Wang, H. Yang, J. Zou, One-dimensional convolutional neural networks for acoustic waste sorting, Journal of Cleaner Production 271 (2020) 122393. doi:https://doi.org/10.1016/j.jclepro.2020.122393]. Moreover, very expensive sensors (cameras) are required, which limits and complicates the widespread use of RVM in many countries. A current review on automatic detection of waste based on computer vision can be found in [S. Majchrowska, A. Mikołajczyk, M. Ferlin, Z. Klawikowska, M. Plantykow, A. Kwasigroch, K. Majek, Deep learning-based waste detection in natural and urban environments, Waste Management 138 (2022) 274-284. doi:https://doi.org/10.1016/j.wasman.2021.12.001].

It should be remarked that methods based on acoustic data for waste classification have started being explored showing a high correlation to the waste material type, but they still are at a very early development stage. For instance, a sound recognition system was developed in [M. K. Korucu, Özgür Kaplan, O. Büyük, M. K. Güllü, An investigation of the usability of sound recognition for source separation of packaging wastes in reverse vending machines, Waste Management 565 (2016) 46- 52. doi:https://doi.org/10.1016/j.wasman.2016.06.030] using as input the sounds that different recyclable items produce when they are returned to the RVM. In particular, sounds emitted by the physical impacts of free falling (within the machine), pneumatic hitting and hydraulic crushing were studied. In [G. Lu, Y. Wang, H. Yang, J. Zou, One-dimensional convolutional neural networks for acoustic waste sorting, Journal of Cleaner Production 271 (2020) 122393. doi:https://doi.org/10.1016/j.jclepro.2020.122393.], this approach was extended by proposing a CNN-based method to classify the free-falling sound produced by a larger set of packaging waste types. Also, in [T. Munaka, F. Samiea, L. Bauer, J. Henkel, Improved feature extraction method for sound recognition applied to automatic sorting of recycling wastes, Journal of Information Processing 28 (2020) 658-665. doi:https://doi.org/10.2197/ipsjjip.28.658], a smart garbage collection service (used for aluminium cans, steel cans, bottles, and plastic bottles) based on Support Vector Machines (SVM) combined with improved Mel Frequency Cepstral Coefficients (MFCC) based features is proposed, obtaining high average accuracy. Very recently, in [O. I. Punch, R. Marhaug, S. Kohtala, M. Steinert, Detecting glass and metal in consumer trash bags during waste collection using convolutional neural networks, Waste Management 119 (2021) 30-38. doi:https: //doi.org/10.1016/j.wasman.2020.09.032], sound recordings have been combined with other sensors as cameras to identify glass and metal in consumer trash bags once they are collected by the waste collection truck, using machine learning algorithms for automatic detection. All these works show promising classification results, pointing out that sound can be used for automatic waste sorting. However, they still have some limitations. On the one hand, most of the approaches use classical machine learning methods (Support Vector Machine "SVM", k-Nearest Neighbors "kNN" or classic Neural Network "NN"). On the other hand, cited prior art documents depend on many variables that make the system difficult to generalise. For instance, something as simple as whether the bin is empty or not when the glass bottle falls into it greatly impacts the sound it generates. Therefore, a more controlled environment is desirable to reduce the variability of the cases to be considered.

It is worth noting that non-contact ultrasonic sensors have already been explored in RVMs but for very different purposes from those in this invention disclosure. They have typically been used as distance sensors to detect whether the bins are filled or not or to detect the level of garbage and the depth of the bin [P. Mestre, C. Serodio, A. Azevedo, H. Correia, I. Bentes, C. Couto, Filling rate assessment of recycling containers using ultrasonic transducers, Measurement 44 (6) (2011) 1084-1095. doi:https://doi.org/10.1016/j.measurement.2011.03.014]. In addition, some geometric attempts have been made to recognize the shape and material of a recycling item in [K. Ohtani, M. Baba, Prototype of mobile super directional loudspeaker, 8 in: 2006 IEEE Instrumentation and Measurement Technology Conference Proceedings, 2006], based again on ultrasonic distance measurements. Finally, it is worth mentioning that multimodal approaches have also been inspected. For instance, in [J. Park, M.-H. Kim, D.-G. Choi, Correspondence learning for deep multimodal recognition and fraud detection, Electronics 10 (7) (2021) 800. doi:https://doi.org/10.3390/electronics10070800], a computer vision system based on RGB images is combined with non-contact ultrasonic sensors based on distance measurements to achieve better accuracy. Yet, ultrasounds are not directly used for identification but as complementary data for the system.

## DESCRIPTION OF THE INVENTION

The present invention discloses a new technology for waste sorting at the source based on a loudspeaker as an alternative to the optical approaches of the prior art. This would result in a more affordable, robust, and low-complex system with reduced maintenance requirements. The idea is to emit a sound field inside the RVM and capture how this acoustic field gets modified in the presence of a recycling container. An artificial intelligence system would automatically classify the items by comparing the perturbed sound field with a database of responses to acoustic excitations. In addition to the above-mentioned benefits, the proposed invention also has the potential to reduce costs, given that acoustic transducers are much cheaper than cameras. Moreover, a system based on audio processing is less computationally demanding in comparison to image processing techniques, which is important in real-time operations. In addition, this approach will avoid the problem of lighting conditions, yet acoustic isolation from external background noise must be considered. All the above-mentioned aspects are expected to facilitate the broader use of RVMs and improve their performance.

The present invention proposes an alternative, innovative, active approach based on the use of an external excitation instead of the current passive approximation of "listening to the sound" that the recyclable item generates when falling into the bin. Active approaches are very common in current acoustic techniques for characterising acoustic material properties. For instance, the measurement of the absorption coefficient of a material sample can be done in a reverberation chamber or in an impedance tube as detailed in the standards ISO 354:2003 and ISO 10534-2:1998, respectively. Essentially, these methods emit sound waves using a loudspeaker and analyse how the sample modifies the generated acoustic field recorded by a microphone. This allows one to deduce some inherent mechanical properties of the material, such as its absorption coefficient or acoustic impedance. On the contrary, the present invention uses simultaneously ultrasonic and/or audible sound excitations in the RVM machine. The idea is to resort to parametric acoustic loudspeakers (PAL) and benefit from analysing both the ultrasonic and the secondary generated audible acoustic field. Alternatively, ultrasonic or audible sound waves could be generated using loudspeakers specifically designed for these frequency ranges. A PAL typically uses piezoelectric ultrasonic transducers to emit a narrow-collimated beam consisting of an ultrasonic carrier with an amplitude-modulated signal. Thanks to nonlinear propagation effects, the air itself demodulates the signal, returning it to the audible range. This results in very focused ultrasonic and audible sound beams. Typical applications of PAL include entertainment, communication and personal messaging in advertising and museums, in mobiles and new horns designs. However, PAL has also been used for in situ material characterization or to measure the insertion loss of thin partitions.

The present invention adopts a distinct approach compared to the approaches of the cited prior art documents. As outlined earlier, the Parametric Acoustic Array "PAA" phenomenon enables simultaneous exploration of both audible and ultrasonic frequency ranges. Unlike typical uses of ultrasound fields for distance measurement, the present invention is able to classify waste packaging by assessing how it alters the ultrasonic and/or audible acoustic fields generated within the RVM. Consequently, the sensor will operate across a broadband frequency spectrum rather than at a single frequency, allowing for the analysis of multiple frequency bands. To achieve this, the present invention employs Exponential Sine Sweeps "ESS", which is highly effective for Parametric Acoustic Arrays "PAL", outperforming white or pink noise. The present invention also applies a methodology for simultaneously measuring impulse responses in both audible and ultrasonic frequency ranges, thus characterizing various packaging items (recyclable containers). Alternatively, the invention can emit either ultrasonic or audible ESS using loudspeakers specifically designed for these frequency ranges, and capture only the impulse response of the recyclable container within the desired frequency range (audible or ultrasonic). Note that, in the context of the present invention "acoustic" includes the frequency ranges of the audible range and/or the ultrasonic range.

In a first aspect of the invention, it is disclosed a system for an automatic classification of recyclable containers. The system comprises:

- a receptacle for holding a recyclable container;
- a computing unit;
- a loudspeaker, which is connected to the computing unit; the loudspeaker is configured to convert a signal from the computing unit into acoustic waves and further configured to emit the acoustic waves against the recyclable container;
- at least one microphone connected to the computing unit, the microphone is configured to capture the acoustic waves.

The computing unit is configured to:

- generate an ESS signal selected from the group consisting of: a modulated ESS signal to the ultrasonic range to work in both the ultrasonic and audible ranges, an audible ESS signal to work in the audible range, or an ultrasonic ESS signal to work in the ultrasonic range;
- send the generated ESS signal to the loudspeaker;
- measure the acoustic waves and compute an acoustic impulse response of the recyclable container (i.e., the acoustic waves needed to compute the impulse response characterizing the recyclable container);
- postprocessing the acoustic impulse response of the recyclable container;
- classify, based on the computed acoustic impulse response, the type of recyclable container using a machine learning algorithm, wherein the machine learning algorithm has been trained using a training dataset, the training dataset including acoustic impulse responses of recyclable containers to ultrasonic waves and/or audible sound waves, and corresponding indications of types of recyclable containers issued from a classification test.

In one embodiment of the system of the present invention, the loudspeaker may be an omnidirectional parametric loudspeaker "OPL". The omnidirectional parametric loudspeaker "OPL" may comprise seven hundred and fifty ultrasonic transducers arranged on a sphere.

In another embodiment of the system of the present invention, the loudspeaker may be a flat Parametric Array Loudspeaker "PAL". The PAL may comprise several ultrasonic transducers arranged on a flat or a curved surface.

In another embodiment of the system of the present invention, the computing unit may be configured to generate the ESS signal (either of three available signals: the modulated ESS signal, the audible ESS signal or the ultrasonic ESS signal) according to the following equation:

$$x(t) = \sin\left[K\left(e^{\frac{t}{L}} - 1\right)\right]K,$$

with

$$K = \frac{2\pi f_1 T}{\ln f_2/f_1}; L = \frac{T}{\ln f_2/f_1};$$

wherein:

$f_1$ = initial frequency of the sweep interval;
$f_2$ = final frequency of the sweep interval;
T = time duration of the sweep;
$f_1$ = 20*Hz*; $f_2$ = 14*kHz*; $T \leq$ 10*s* for the audible range;
$f_1$ = 40*kHz*; $f_2$ = 53*kHz*; $T \leq$ 1*s* for the ultrasonic range.

The computing unit may be further configured to add a fade-in signal and/or a fade-out signal to the generated ESS signal. For the audible range, the fade-in signal is a linear ramp from 20 Hz to 80 Hz and the fade-out signal is a linear ramp from 12 kHz to 14 kHz. For the ultrasonic range, the fade-in signal is a linear ramp from 40 kHz to 41 kHz and the fade-out signal is a linear ramp from 51 kHz to 53 kHz.

The computing unit, for being configured to measure the acoustic waves needed to compute an acoustic impulse response of the recyclable container, may be further configured to:

• compute the audible impulse response $h_a(t)$ as:

$$h_a(t) = y(t) * g_a(t),$$

with $g_a(t)$ being the inverse filter of the ESS computed as:

$$g_a(t) = \tilde{x}(T - t)\left(\frac{f_2}{f_1}\right)^{-t/T}$$

where $\tilde{x}(t)$ is the generated ESS signal previously defined in $x(t) = \sin\left[K\left(e^{\frac{t}{L}} - 1\right)\right]K$, but with the fade in/out already applied;

• compute the ultrasonic impulse response $h_u(t)$ as:

$$h_u(t) = y(t) * g_u(t),$$

with $g_u(t)$ being the inverse filter of the ESS computed as:

$$g_u(t) = \tilde{x}(T - t)\left(\frac{f_2}{f_1}\right)^{-t/T}$$

where $\tilde{x}(t)$ is the generated ESS signal previously defined in $x(t) = \sin\left[K\left(e^{\frac{t}{L}} - 1\right)\right]K$, but with the fade in/out already applied;

• compute simultaneously the audible impulse response $h_a(t)$ and the ultrasonic impulse response $h_u(t)$ as:

$$h_a(t) = y(t) * g_a(t),$$

$$h_u(t) = y(t) * g_{um}(t),$$

where $g_{um}(t)$ is the inverse filter for the ultrasonic range, obtained after modulating $g_a(t)$ to the ultrasonic frequency range. For instance, using Upper Side Band Amplitude Modulation "USBAM" technique and $f_c$ = 41.4 kHz.

The computing unit, for postprocessing the ultrasonic impulse response of the recyclable container, when the acoustic impulse response is computed from a signal to the ultrasonic range, may be further configured to downsample the ultrasonic impulse response to the audible range as follows:

• computing the Fast Fourier Transform (FFT) of the ultrasonic impulse response with N points: $H_u[k] = FFT\{h_u[n]\}$, where k denotes the frequency index and N is set to the effective length of the impulse response; typically, $N \leq f_s$, with $f_s$

with the sampling frequency;

- find the frequency indexes $k_l$ and $k_U$ respectively corresponding to the lowest ultrasonic frequency used, and the one corresponding to the Nyquist frequency as:

$$k_l = \left\lfloor \left(\frac{f_c}{f_s}\right) N \right\rceil \text{ and } k_u = \lfloor N/2 \rfloor;$$

with $\lfloor \cdot \rceil$ being the rounding operator to the nearest integer;

- select frequency samples between $k_l$ and the Nyquist frequency in $H_u$:

$$H'_u[k] = H_u[k + k_l], \ 0 \leq k \leq k_u - k_l \ ;$$

- generate a new vector that contains the information of the $H'_u[k]$ plus its symmetrical complex conjugate and make the first sample real, to ensure that the time representation is a real discrete signal:

-

$$H_{ua}[0] = \Re\{H'_u[0]\}$$

-

$$H_{ua}[k] = H'_u[k] \text{ for } 1 \leq k \leq k_u - k_l$$

-

$$H_{ua}[k] = (H'_u[2(k_u - k_l) - k+1])^* \text{ for } k_u - k_l + 1 \leq k \leq 2(k_u - k_l) \ ;$$

being $\Re\{x\}$ the real part of x, and x* the complex conjugate of x;

- compute of the final impulse response applying the inverse FFT to $H_{ua}[k]$:

$$h_{ua}[n] = \text{FFT}^{-1}\{H_{ua}[k]\} \ ;$$

The above steps result in a reduction of the signal length and a decrease of the sampling frequency to $f'_s$ ; only when it is used the modulated ESS signal, $f'_s = 2(f_s/2 - f_c)$ Hz.

- downsample the signal to the audible range, i.e., $f''_s = 44100$ Hz.

In another embodiment of the system of the present invention, the computing unit may comprise:

- a microprocessor (or CPUs, or GPUs, or FPGA);
- a preamplifier connected to the microphone;
- an Analog-to-Digital converter connected to the preamplifier and to the microprocessor;
- a Digital-to-Analog converter connected to the microprocessor;
- a power amplifier connected to the Digital-to-Analog converter and to the loudspeaker.

In a second aspect of the invention, it is disclosed a method for an automatic classification of recyclable containers, the method comprising:

- generating an ESS signal selected from the group consisting of: a modulated ESS signal to the ultrasonic range to work in both the ultrasonic and audible ranges, an audible ESS signal to work in the audible range, and an ultrasonic ESS signal to work in the ultrasonic range;
- converting the generated ESS signal into acoustic waves and emitting the acoustic waves against a recyclable container;
- measuring the acoustic waves and computing an acoustic impulse response of the recyclable container;
- postprocessing the acoustic impulse response of the recyclable container;

- classifying, based on the computed acoustic impulse response, the type of recyclable container using a machine learning algorithm,

wherein the machine learning algorithm has been trained using a training dataset, the training dataset including acoustic impulse responses of recyclable containers to ultrasonic waves and audible sound waves, and corresponding indications of types of recyclable containers issued from a classification test.

In one embodiment of the method of the present invention, the method, for the step of generating an ESS signal, may further comprise calculating the ESS signal according to the following equation:

$$x(t) = \sin\left[K\left(e^{\frac{t}{L}} - 1\right)\right]K,$$

with

$$K = \frac{2\pi f_1 T}{\ln f_2/f_1}; L = \frac{T}{\ln f_2/f_1};$$

wherein:

$f_1$ = initial frequency of the sweep interval;
$f_2$ = final frequency of the sweep interval;
$T$ = time duration of the sweep;
$f_1 = 20Hz; f_2 = 14kHz; T \leq 10s$ for the audible range;
$f_1 = 40kHz; f_2 = 53kHz; T \leq 1s$ for the ultrasonic range.

The method, for the step of generating an ESS signal, may further comprise adding a fade-in signal and/or a fade-out signal to the calculated ESS signal. The fade-in signal may be a linear ramp from 20Hz to 80 Hz and the fade-out signal may be a linear ramp from 12 kHz to 14 kHz for the audible range.

In another embodiment of the method of the present invention, the method, for the step of generating an ESS signal, may further comprise:

- computing the audible impulse response $h_a(t)$ as:

$$h_a(t) = y(t) * g_a(t),$$

with $g_a(t)$ being the inverse filter of the ESS computed as:

$$g_a(t) = \tilde{x}(T - t)\left(\frac{f_2}{f_1}\right)^{-t/T}$$

where $\tilde{x}(t)$ is the ESS previously defined as $x(t) = \sin\left[K\left(e^{\frac{t}{L}} - 1\right)\right]K$, but with the fade in/out already applied;

- computing the ultrasonic impulse response $h_u(t)$ as:

$$h_u(t) = y(t) * g_u(t),$$

with $g_u(t)$ being the inverse filter of the ESS computed as:

$$g_u(t) = \tilde{x}(T - t)\left(\frac{f_2}{f_1}\right)^{-t/T}$$

where $\tilde{x}(t)$ is the generated ESS signal previously defined in $x(t) = \sin\left[K\left(e^{\frac{t}{L}} - 1\right)\right]K$, but with the fade in/out already applied;

- computing simultaneously the audible impulse response $h_a(t)$ and the ultrasonic impulse response $h_u(t)$ as:

$$h_a(t) = y(t) * g_a(t),$$

$$h_u(t) = y(t) * g_{um}(t),$$

where $g_{um}(t)$ is the inverse filter for the ultrasonic range, obtained after modulating $g_a(t)$ to the ultrasonic frequency range. For instance, using Upper Side Band Amplitude Modulation "USBAM" technique and $f_c$ = 41.4 kHz.

In another embodiment of the method of the present invention, the method, for the step of postprocessing the acoustic impulse response of the recyclable container when the acoustic impulse response is computed from a signal to the ultrasonic range, for dowmsampling the ultrasonic part of the signal to the audible range, may further comprise:

- computing the Fast Fourier Transform (FFT) of the ultrasonic impulse response with $N$ points: $H_u[k] = FFT\{h_u[n]\}$, where $k$ denotes the frequency index and N is set to the effective length of the impulse response; typically, $N \leq f_S$, with $f_S$ with the sampling frequency;

- finding the frequency indexes $k_l$ and $k_U$ respectively corresponding to the lowest ultrasonic frequency used, and the one corresponding to the Nyquist frequency as:

$$k_l = \left\lfloor \left(\frac{f_c}{f_s}\right) N \right\rceil \text{ and } k_u = \lfloor N/2 \rfloor;$$

with $\lfloor \cdot \rceil$ being the rounding operator to the nearest integer;

- selecting frequency samples between ki and the Nyquist frequency in $H_u$:

$$H'_u[k] = H_u[k + k_l], \ 0 \leq k \leq k_u - k_l;$$

- generating a new vector that contains the information of $H'_u[k]$ plus its symmetrical complex conjugate and make the first sample real, to ensure that the time representation is a real discrete signal:

- 

$$H_{ua}[0] = \Re\{H'_u[0]\}$$

- 

$$H_{ua}[k] = H'_u[k] \text{ for } 1 \leq k \leq k_u - k_l$$

- 

$$H_{ua}[k] = (H'_u[2(k_u - k_l) - k+1])^* \text{ for } k_u - k_l + 1 \leq k \leq 2(k_u - k_l);$$

being $\Re\{x\}$ the real part of x, and x* the complex conjugate of x;

- computing of the final impulse response applying the inverse FFT to $H_{ua}[k]$:

$$h_{ua}[n] = FFT^{-1}\{H_{ua}[k]\};$$

The above steps result in a reduction of the signal length and a decrease of the sampling frequency to $f'_s$; only when it is used the modulated ESS signal, $f'_s = 2(f_s/2 - f_c)$ Hz.

- downsampling the signal to the audible range, i.e., $f_s^{''} = 44100$ Hz.

In a third aspect of the present invention, a Reverse Vending Machine "RVM" is disclosed. The Reverse Vending Machine "RVM" comprises the system for an automatic classification of recyclable containers of the first aspect of the present invention.

**BRIEF DESCRIPTION OF THE FIGURES**

Figure 1 shows the system for an automatic classification of recyclable containers according to one embodiment of the present invention.

Figure 2 shows an interior of a Reserve Vending Machine "RVM" comprising the system shown in Figure 1.

Figure 3 shows from how the ultrasonic and audible impulse response is calculated by the present invention to show an overview of the different algorithms that are used to automatically classify packaging waste.

Figures 4a to 4d shows four examples of the impulse response measurements performed to four types of recyclable materials: metal (Fig. 4a), plastic (Fig.4b), glass (Fig. 4c) and cardboard (Fig. 4d).

Figure 5 shows the confusion matrix of the testing set when using the SVM algorithm and both the ultrasonic and audible impulse responses.

**DESCRIPTION OF PREFERRED EMBODIMENTS OF THE INVENTION**

References used in the figures:

1.- system for an automatic classification of recyclable containers of the present invention;
2.- receptacle:
3.- container;
4.- computing unit;

- 40.- microprocessor;
- 41.- preamplifier;
- 42.- Analog-to-Digital converter;
- 43.- power amplifier;
- 44.-Digital-to-Analog converter;

5.- loudspeaker;

- 50.- ultrasonic waves;
- 51.- audible sound waves;
- 52.- acoustic (audible and/or ultrasonic) impulse responses;

6. -;
7. Microphone;
8. Display;
9. Conveyor belt;
10. Reverse Vending Machine "RVM";
11. Inlet;
12. Outlet;

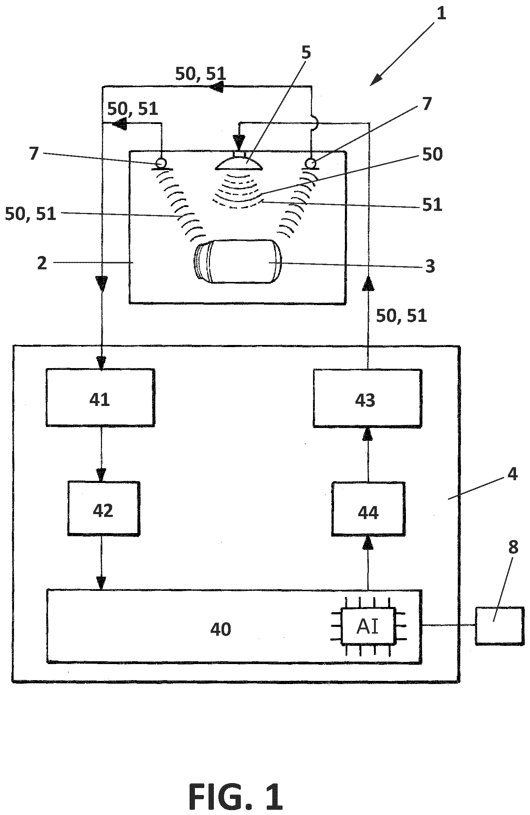

Figure 1 shows an embodiment of the system for an automatic classification of recyclable containers according to the present invention. The system 1 comprises the computing unit 4, the loudspeaker 5, the microphones 7 and the receptacle 2 for holding the recyclable container 3. The system also comprises the display 8. For the embodiment shown in Figure 1, the system comprises the loudspeaker 5 and the microphones 7 placed on the upper part of the receptacle 2 facing the interior of the receptacle 2. The computing unit 4 comprises the microprocessor 40, the preamplifier 41, the Analog-to-Digital converter 42, the power amplifier 43 and the Digital-to-Analog converter 44. The preamplifier 41 is connected to the microphones 7. The preamplifier 41 is configured to amplify the ultrasonic waves 50 and/or audible waves 51 captured by the microphones 7. The Analog-to-Digital converter 42 is connected to the preamplifier 41 and to the microprocessor 40. The Analog-to-Digital "ADC" converter 42 converts the ultrasonic waves 50 and/or audible waves 51, which are analog signals, into digital signals to be sent to the microprocessor 40. The microprocessor 40 is connected to the Digital-to-Analog "DAC" converter 44, which is connected to the preamplifier 43. The microprocessor 40 computes the audible and/or ultrasonic impulse responses from the recorded digital signal, to form the acoustic impulse response 52. The microprocessor 40 modulates the ESS signal for the loudspeaker 5 to generate simultaneously the audible waves 50 and ultrasonic waves 51, or emits an audible ESS signal to generate only the audible waves 50, or emits an ultrasonic ESS to generate only the ultrasonic waves 51. Finally, the power amplifier 43 sends the ESS signal to the loudspeaker 5. The analog modulated ESS results in the ultrasonic waves 50 and audible sound waves 51, whereas the analog ultrasonic ESS only generates the ultrasonic sound waves 50, and the analog audible ESS generates the audible sound waves 51. Thus, the microphones 7 capture either the ultrasonic 50 and/or audible 51 acoustic waves emitted by the loudspeaker 5.

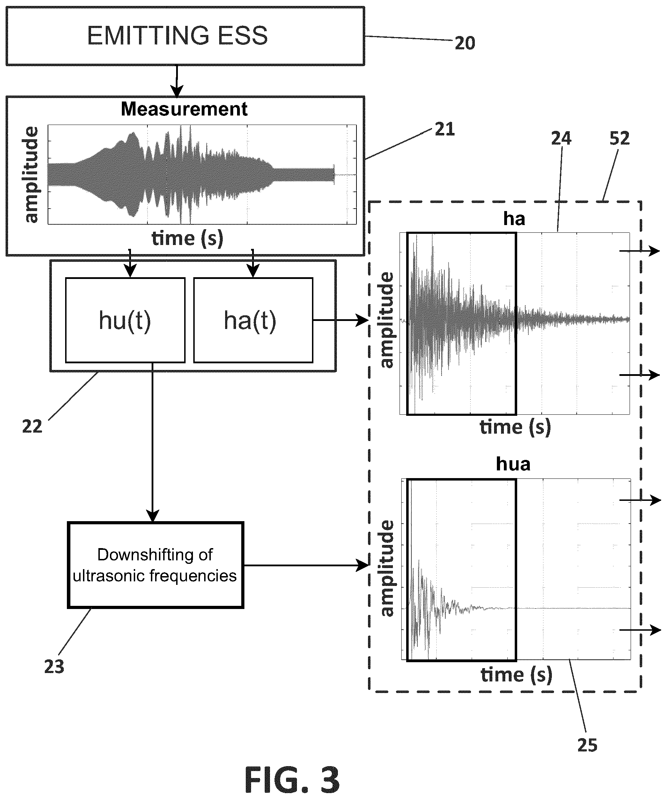

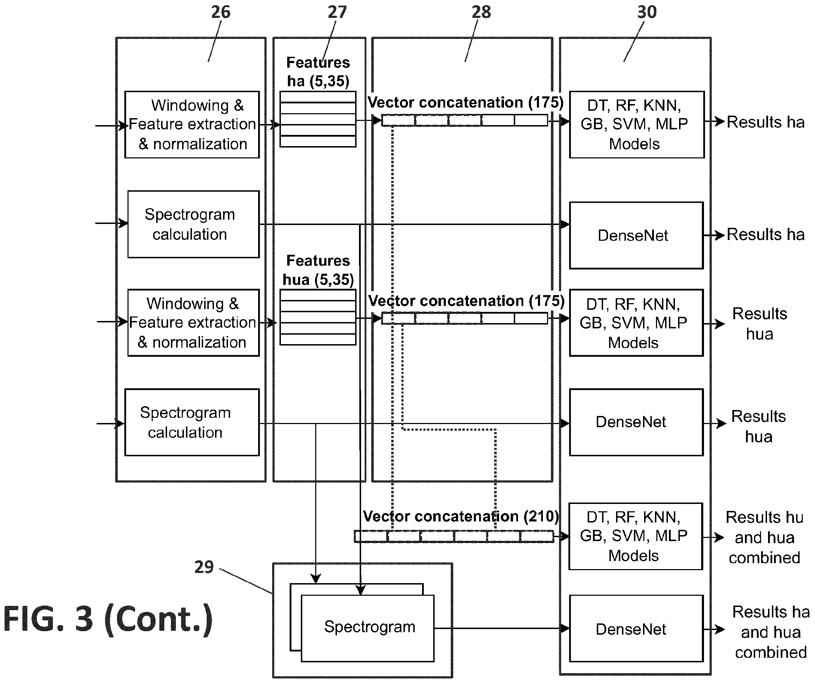

The microprocessor 40 is configured to: generate an ESS signal selected from the group consisting of: the modulated ESS signal to the ultrasonic range, the audible ESS and the ultrasonic ESS; send the generated ESS signal to the loudspeaker 5; compute the acoustic impulse responses 52 of the recyclable container 3; and, classify, based on the computed acoustic impulse responses 52, the type of recyclable container 3 using a machine learning algorithm, wherein the machine learning algorithm has been trained using a training dataset, the training dataset including acoustic impulse responses of recyclable containers to ultrasonic sound waves and audible sound waves, and corresponding indications of types of recyclable containers issued from a classification test described in Figure 3.

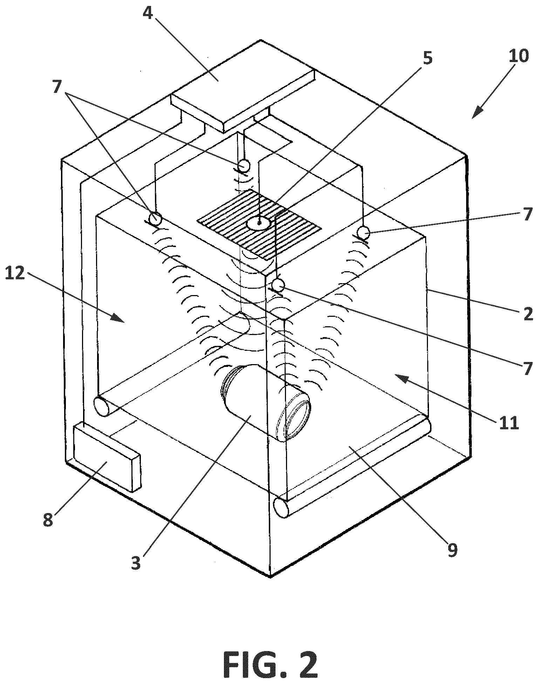

Figure 2 shows the interior of a reserve vending machine "RVM" 10 comprising the system of Figure 1. Thus, the RVM comprises the system 1 of Figure 1, the inlet 11, the outlet 12, the display 8 and the conveyor belt 9. The display 8 and the conveyor belt 9 are connected and controlled by the computing unit 4. The RVM comprises the receptacle 2 for holding the recyclable container 3, which goes through the interior of the receptacle on the conveyor belt 9. The conveyor belt 9 moves the recyclable container 3 from the inlet 11 to the outlet 12. When the recyclable container 3 is placed by the conveyor belt in the middle of the receptacle 2, the computing unit 4 is able to classify the recyclable container 3 according to a Machine Learning algorithm that has been trained using a training dataset.

The training dataset includes packaging waste of various shapes and materials that can potentially be returned to a reverse vending machine. Specifically, the Machine Learning algorithm has been trained with the following items:

- 16 glass bottles and jars.
- 11 metallic cans.
- 15 plastic bottles.
- 9 cardboard packaging.

This results in a total of 51 different packaging wastes. Each item is inserted vertically and horizontally within the reverberant enclosure and rotated every 30 degrees with the rotating table, which considerably enlarges the samples in the dataset. Consequently, for each individual item, the following measurements were taken:

- different package positions (in vertical and horizontal);
- 12 different rotations per position;
- 4 microphones to collect the acoustic data.

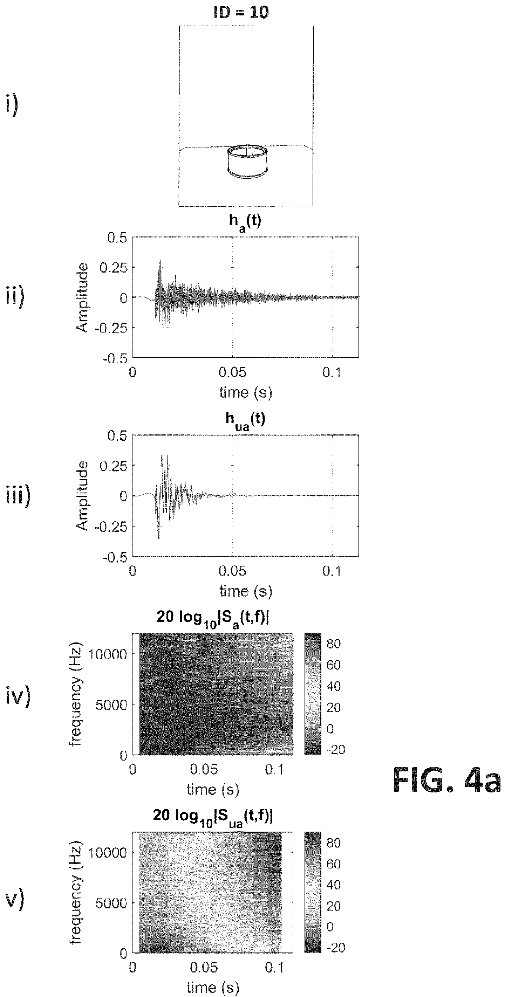

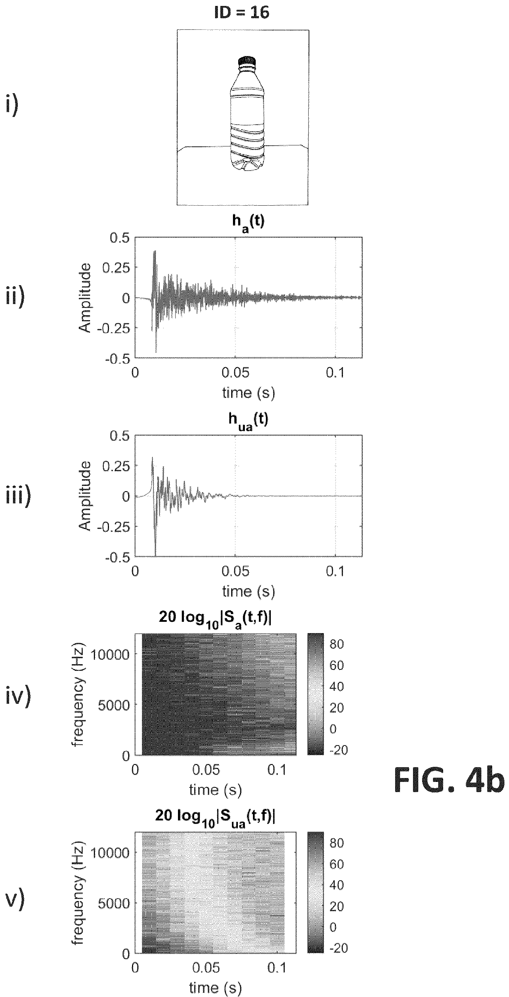

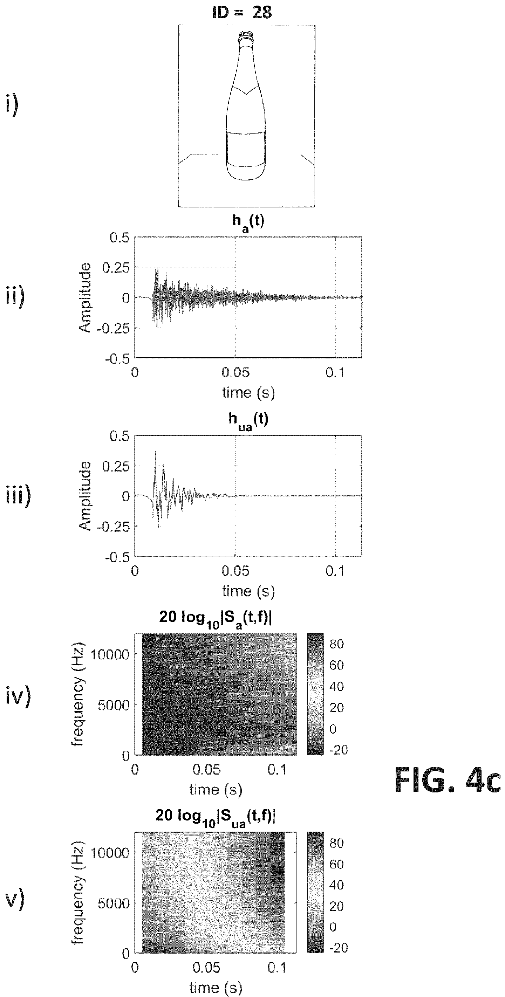

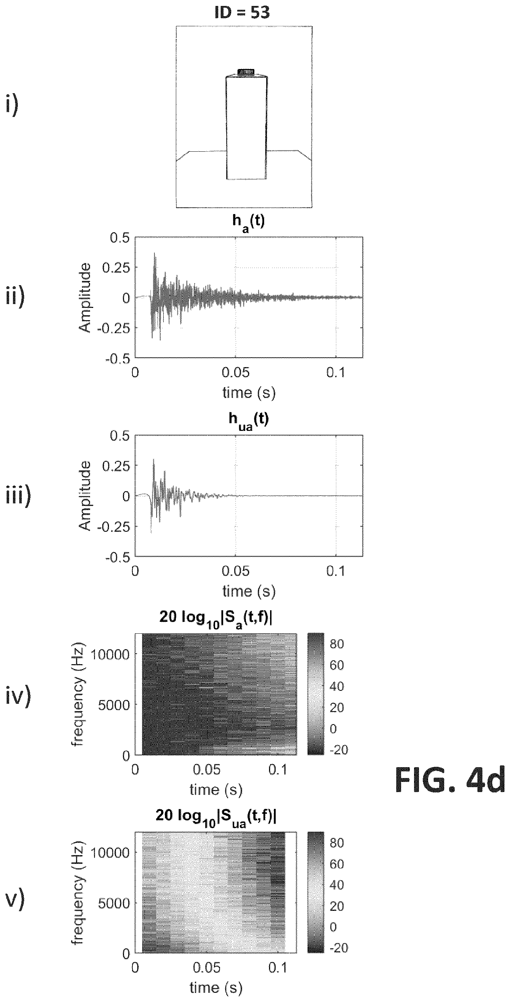

Therefore, for each item, 2 × 12 × 4 = 96 measurements were made, resulting in a dataset containing 4,896 acoustic impulse responses. Figure 4, explained in detail later, shows four examples of the impulse response measurements performed to four types of recyclable materials: glass, metal, plastic, and cardboard.

Figure 3 shows how the ultrasonic and audible impulse response is calculated by the present invention. Exponential sine sweeps "ESS" are used to compute the impulse response of each item. They read:

$$x(t) = \sin\left[K\left(e^{\frac{t}{L}} - 1\right)\right]K, \qquad \text{Eq. (1)}$$

with

$$K = \frac{2\pi f_1 T}{\ln f_2/f_1}; \ L = \frac{T}{\ln f_2/f_1}. \qquad \text{Eq. (2)}$$

The sweep's frequency range was set between $f_1$ = 20 Hz and $f_2$ = 14 kHz, with a duration of T = 10s for all measurements. Two seconds of silence were added before the ESS to ensure the complete recording of the sweep. Following the ESS, a three second silence period was included after the sweep to allow the energy to decay to background noise levels. To mitigate preringing artefacts during impulse response computation, fade-in and fade-out techniques were applied to the ESS signal. Linear ramps were designed for this purpose, covering the frequency ranges from 20 Hz to 80 Hz during the fade-in and from 12 kHz to 14 kHz during the fade-out. The resulting frequency range for effective analysis was therefore narrowed to 80 Hz to 12 kHz. Next step consists in modulating the ESS to the ultrasonic range so it can be emitted by the loudspeaker. Preferably, an omnidirectional parametric loudspeaker "OPL" is used. An Upper Side Band Amplitude Modulation (USBAM) is employed for this purpose, using a carrier frequency of $f_c$ = 41.4kHz.

The loudspeaker emits **20** the ultrasonic ESS, generating both audible and ultrasonic waves thanks to the Parametric Acoustic Array "PAA" phenomenon. These sound waves are captured by the microphones 7, obtaining *y(t)* **21.** For each microphone 7, the audible impulse response $h_a(t)$ can next be computed as:

$$h_a(t) = y(t) * g_a(t),$$
<div align="right">Eq. (3)</div>

with $g_a(t)$ being the inverse filter of the ESS. This can be computed as:

$$g_a(t) = \tilde{x}(T - t)\left(\frac{f_2}{f_1}\right)^{-t/T}$$
<div align="right">Eq. (4)</div>

where $\tilde{x}(t)$ is the ESS defined in Eq. (1) but with the fade in/out already applied. Then, the audible impulse response ha(t) and the ultrasonic impulse response $h_u(t)$ are simultaneously calculated as:

$$h_a(t) = y(t) * g_a(t),$$
$$h_u(t) = y(t) * g_{um}(t),$$
<div align="right">Eq. (5)</div>

where $g_{um}(t)$ is the inverse filter of the ESS previously calculated for the ultrasonic range, obtained after modulating $g_a(t)$ using USBAM and $f_c$ = 41.4 kHz.

After computing **22** the ultrasonic and audible impulse response, the invention carries out a postprocessing of the impulse responses. Firstly, it is calculated **22** the $h_u[n]$ and $h_a[n]$ functions as the discrete versions of $h_u(t)$ and $h_a(t)$, sampled with an $f_s$ = 131072 Hz. These two functions contain the linear and nonlinear impulse responses in the ultrasonic and audible range. To obtain the linear part, a rectangular window of 100 ms length is applied. However, such a high sampling frequency is not useful for audio applications, so these two functions ($h_u[n]$ and $h_a[n]$) were reduced to 44100 Hz. $h_a[n]$ **24** contains all the energy concentrated in the audible range, so this process can be easily performed. However, this is not the case for $h_u$, which has information in the ultrasonic range, specifically, in $f_c$ plus the ESS frequency range. To do so, this frequency content was translated to the audible frequency band, obtaining the ultrasonic impulse response $h_{ua}[n]$ **25.** This adaptation procedure **23** consists of the following steps:

- Compute the Fast Fourier Transform (FFT) of N = $f_s$ points the ultrasonic impulse response: $H_u[k]$ =FFT{$h_u[n]$} where k denotes the frequency index.

- Find the frequency indexes $k_l$ and $k_U$ respectively corresponding to the lowest ultrasonic frequency used (carrier frequency $f_c$ = 41400 Hz), and the one corresponding to the Nyquist frequency as:

$$k_l = \left\lfloor \left(\frac{f_c}{f_s}\right) N \right\rceil \text{ and } k_u = \lfloor N/2 \rfloor.$$

with $\lfloor \cdot \rceil$ being the rounding operator to the nearest integer.

- Select frequency samples between $k_l$ and the Nyquist frequency in $H_u$:

$$H'_u[k] = H_u[k + k_l], \ 0 \leq k \leq k_u - k_l.$$

- Generate a new vector that contains this information plus its symmetrical complex conjugate and make the first sample real, to ensure that the time representation is a real discrete signal:

- 

$$H_{ua}[0] = \Re\{H'_u\,[0]\}$$

- 

$$H_{ua}[\mathrm{k}] = H'_u\,[k] \text{ for } 1 \leq k \leq k_u - k_l$$

- 

$$H_{ua}[\mathrm{k}] = (H'_u\,[2(k_u - k_l) - k+1])^* \text{ for } k_u - k_l + 1 \leq \mathrm{k} \leq 2(k_u - k_l)$$

being $\Re\{x\}$ the real part of x, and x* the complex conjugate of x.

- Compute of the final impulse response applying the inverse FFT to $H_{ua}[k]$:

$$h_{ua}[\mathrm{n}] = \mathrm{FFT}^{-1}\,\{H_{ua}[k]\}$$

The above steps result in a reduction of the signal length and a decrease of the sampling frequency to $f'_s$ ; only when it is used the modulated ESS signal, $f'_s = 2(f_s/2 - f_c)$ Hz.

- downsample the signal to $f''_s = 44100$ Hz as in the audible range.

The above adaption procedure enables the use of a lower sampling frequency, which reduces computational costs. More importantly, it allows the application of machine learning and deep learning techniques, commonly used in the audible range, to also be applied to the ultrasonic range.

Following the postprocessing of the impulse responses, the present invention carries out a step in which a set of acoustic features is extracted **26.** These features, commonly employed in acoustic event detection and automatic speech recognition, are calculated to serve as inputs for classical machine learning algorithms. The specific features **27** extracted included thirteen Mel Frequency Cepstral Coefficients (MFCC), thirteen GammaTone Cepstral Coefficients (GTCC), as well as various spectral descriptors: Spectral Centroid, Spectral Crest, Spectral Entropy, Spectral Flatness, Spectral Flux, Spectral Kurtosis, Spectral Rolloff Point, Spectral Skewness, and Spectral Spread. The above features **27** are calculated for the impulse responses $h_a$ and $h_{ua}$ applying Hamming windows of 20 milliseconds with an overlapping of 50 %. Each impulse response was represented by the first five feature vectors **28,** capturing its most energetic component, which spans the initial 60 ms, including the onset.

On the other hand, the spectrogram **29** of each impulse response was computed to serve as input for the deep learning-based approach to address the problem. This solution provides an alternative to traditional machine learning approaches, offering a different data representation to more effectively capture subtle differences between samples. The spectrograms were computed using 128 mel bands, using a window length of 40 ms (which encompasses Fast Fourier Transforms of 1764 points) with an overlap of 38 ms (95 %).

The diversity of features allows to compare the most traditional machine learning techniques with newer deep learning approaches.

Figure 3 further shows an overview of the different algorithms **30** that are used to automatically classify packaging waste. These algorithms use as input the audible impulse response $h_a(t)$ and/or the ultrasonic impulse response $h_{ua}(t)$, obtained simultaneously from measurements using the exponential sine sweep technique. The figure also shows the measured signal as captured by a microphone, and the resulting impulse responses after applying the postprocessing techniques detailed in previous paragraphs. The boxes in the impulse responses indicate the region considered for the analysis (60 ms), selected to contain the highest energy part of the original impulse responses.

Focussing on the models based on machine learning, several algorithms were trained and evaluated to verify whether the features obtained from $h_{ua}(t)$ or $h_a(t)$ were representative enough to perform automatic classification of packaging waste. Moreover, the algorithms were also trained by combining the features of both fields ($h_{ua}$ and $h_a$), as can be seen in Figure 3.

For training the machine learning algorithms, a different process was carried out when using $h_{ua}$ or $h_a$ as inputs and when merging features from both fields. Firstly, the configurations with $h_{ua}$ and $h_a$ alone are used. As explained in step of "postprocessing of the impulse responses", each impulse response was translated into five vectors of features (see also Figure 3), each of which contain 35 elements (features). These five vectors are horizontally concatenated obtaining a single vector with 175 elements (5 × 35). Note that in this way, every impulse response of the dataset was represented in a single vector, which was used as an individual sample for training the algorithms.

When combining the features of $h_{ua}$ and $h_a$, though, only the features of the first 20 milliseconds window were used. A horizontal concatenation of those feature vectors resulted in a single vector of 210 positions. The decision of not using the remaining four windows was that, otherwise, the concatenated vector had too many features (360), and after some evaluation of the machine learning algorithms it was shown that the results were worse in terms of classification metrics.

Five different classic algorithms **30** with different parameters are evaluated: a Decision Tree (DT) classifier, a Random Forest (RF) classifier, a K-Nearest Neighbours (KNN) classifier, a Gradient Boosting (GB) classifier and, finally, a Support Vector Machine (SVM) classifier. A grid search is conducted to find the best parameters for each classifier.

In addition to classical Machine Learning techniques, two deep learning techniques **30** have been explored. The first consists of a multilayer perceptron "MLP", trained with the same acoustical features as in the traditional machine learning models previously used. This model did not go through a process of hyperparametrization and instead was tested with a few architectures, selecting the one that performed better. The architecture of this model resulted in 4 hidden layers of 128, 256, 512 and 128 neurons plus the input layer, of size equal to the size of the audio feature set, and the output layer of 4 neurons for multiclass classification.

The second model is a pre-trained DenseNet, which takes spectrograms as inputs. The DenseNet model was selected due to its architecture. The output of each convolutional block is fed to all subsequent blocks, which helps mitigating information loss, albeit at the cost of increased computational and memory demands. The architecture used is a *"DenseNet 121"*, the smallest model of the DenseNet family, which was found to be convenient due to the limited data set. It is important to note that DenseNet typically uses a three-channel input corresponding to the RGB channels of an image. To take into account this, the spectrograms were replicated on the three channels and normalized following the Imagenet normalization standard. This process is only used when using one type of impulse response at once, audible or ultrasonic. When dealing with both at the same time, the first channel is composed of the ultrasonic response, the second of the audible response, and the third is left empty.

For the evaluation of the used techniques (classical Machine Learning techniques and Deep Learning techniques), data was shuffled and divided into train-test splits. Specifically, 80% of the data was used for training, while the remaining 20% was kept apart for a final testing phase. Using the training set, the algorithms were evaluated using cross-validation with five different folds. Finally, the algorithms that achieved the best results during cross-validation were then retrained with the full training set and evaluated with the unseen testing set to generate the final performance metrics.

Relevant metrics such as the classification accuracy, the macro F1-score, the macro precision and macro recall have been used to evaluate the performance of the classifiers. Also, as a pre-processing step, all the data was standardized before the training of the algorithms. The mean and standard deviations of each feature were obtained from the training fold each time. Then, every sample was pre-processed by applying the following equation z = (x - mean)/std, aiming to obtain standard normally distributed data.

Finally, the present invention classifies the recyclable container 3 using the ultrasonic dataset, the audible dataset or a combination of both of them.

Figure 4 shows four examples of the measurements performed, with each column corresponding to one of the four analysed types of recyclable materials: a) metal, b) plastic c) glass, and d) cardboard. Items are shown in the first row "i)". The second "ii)" and third "iii)" rows respectively display the audible $h_a(t)$ and ultrasonic $h_{ua}(t)$ impulse responses, whereas the fourth "iv)" and fifth "v)" rows show their respective spectrograms, $S_a(t,f)$ and $S_{ua}(t,f)$. In all cases, the measurement setup is the same for ease of comparison, placing the item in a vertical position with a 0-degree rotation and using the same receiving microphone.

Focusing first on the time domain impulse responses, it is observed that the ultrasonic responses decay much faster than the audible ones. This is mainly because materials typically have higher absorption coefficients at higher frequencies than at lower frequencies, which is especially noticeable when it comes to the ultrasonic range. Although propagation in air could also contribute, as it absorbs sound waves more effectively in the ultrasonic range, this explanation is less plausible given the small dimensions of the enclosure used in the experiments. The audible impulse responses exhibit greater variability and noise than the ultrasonic responses. However, clear differences between the four material categories are observed for both audible and ultrasonic impulse responses.

The above findings are also observed in the spectrograms, with faster decays in the ultrasonic responses compared to the audible ones. Closer inspection reveals that the ultrasonic energy is more prominent in the lowest frequency content, whereas in the audible spectrograms the energy is concentrated in the region around 2.5 kHz. Note also that the information in the first 60 ms used for the classification system covers the most energetic parts of the impulse responses, especially in the case of post-processed ultrasound. Nevertheless, slight variations in the spectrograms are observed when comparing the four materials although it is acknowledged that these differences are difficult to discern with the naked eye.

The results obtained using the ultrasonic dataset containing the $h_{ua}$ impulse response are presented in Table 1. Table 1 contains the results obtained using the ultrasonic dataset with the $h_{ua}(t)$ impulse responses, spit into cross-validation and test evaluation. The first one shows the mean values and the standard deviation obtained in the cross-validation stage, while the second one presents the results from training on all the training data and evaluating it using the test set. As detailed above for the evaluation of the algorithms, this final evaluation is performed using the best classical machine learning algorithm and the best deep learning technique.

Focusing first on the cross-validation results, the KNN and SVM machine learning models exhibit the best performance.

Table 1: Classification metrics obtained through cross-validation and test using the ultrasonic database of impulse responses hua(t). The tested algorithms include classical machine learning techniques (DT, RF, KNN, GB and SVM) and deep neural networks (MLP and DenseNet).

|  | Algorithm | Accuracy | F1-score | Precision | Recall |
|---|---|---|---|---|---|
| Cross-validation | DT | 47%±2% | 46%±2% | 46%±2% | 46%±2% |
|  | RF | 73%±2% | 72%±2% | 77%±2% | 70%±2% |
|  | KNN | 88%±1% | 87%±1% | 88%±1% | 87%±1% |
|  | GB | 66%±1% | 65%±1% | 67%±1% | 64%±1% |
|  | SVM | 87%±1% | 87%±1% | 88%±1% | 87%±1% |
|  | MLP | 66%±0% | 67%±0% | 66%±0% | 66%±0% |
|  | DenseNet | 82%±0% | 81%±0% | 81%±0% | 82%±0% |
| Test | SVM | 90% | 90% | 90% | 90% |
|  | DenseNet | 82% | 82% | 81% | 81% |

Specifically, the parameters that led to the best results were K = 3 for the KNN algorithm, a Radial Basis Function (RBF) kernel for the SVM, (with a regularization parameter C = 10), and 100 trees for the RF and GB algorithms. Deep learning models, particularly DenseNet, also achieve excellent classification results, with performance comparable to the classical machine learning models. All algorithms demonstrate a low standard deviation across all evaluated metrics. This indicates that each fold in the 5-fold cross-validation scheme yields consistently similar classification results. This low variability in performance metrics across folds suggests that the algorithms are robust and exhibit high stability, as the models do not show significant sensitivity to the specific subsets of data used in each training and testing iteration. Consequently, the observed stability implies that the data folds are likely representative of the overall dataset, leading to reliable generalisation of the results. Such consistency across folds enhances confidence in the reproducibility of the algorithms' performance and indicates that the observed metrics are not dependent on any particular partitioning of the data, further supporting the reliability of the proposed approach.

Similar results are observed when training is performed without cross-validation (see Test in Table 1). For the SVM algorithm, cross-validation results achieve an F1-score of 87% with a standard deviation of 1%, and then the results of the Test set give an F1-score of 90%, yielding to an increase of only a 3%. In the case of DenseNet, the cross-validation F1-score is 81% and the testing one is 82%, with an increase of 1%. This shows that although the models are trained using a larger dataset, the performance metrics of the SVM and DenseNet remain consistent with those obtained during cross-validation, confirming the robustness and reliability of the reported results.

The results obtained using the audible dataset containing the $h_a(t)$ impulse response are presented in Table 2. The algorithms that provide the best results in the cross-validation stage are again the SVM for classical machine learning and the DenseNet for deep learning, reaching accuracy values of 84 % and 89 %, respectively. Similar results are obtained compared to those in Table 1 for $h_{ua}(t)$, although ultrasonic values perform slightly better with the SVM (F1-score of 87% for the ultrasonic data versus the 84% of the audible ones). In case of the convolutional neural network (DenseNet), it performs slightly better when using the audible dataset (F1-score of 89% using the audible data versus 82% when using the ultrasonic one). Note also that the standard deviation between folds still tends to 0%, revealing that the training of the system was also consistent among folds and did not depend on the splitting of the data.

For the final evaluation stage, observe that the SVM and the DenseNet have similar metrics than those obtained in the cross-validation, as occurred for the ultrasonic responses in Table 1, and reaching a maximum F1-score of 89% when using the DenseNet model.

Table 2: Classification metrics obtained through cross-validation and test using the audible database of impulse responses ha(t). The tested algorithms include classical machine learning techniques (DT, RF, KNN, GB and SVM) and deep neural networks (MLP and DenseNet).

| | Algorithm | Accuracy | F1-score | Precision | Recall |
|---|---|---|---|---|---|
| Cross-validation | DT | 46%±1% | 45%±1% | 45%±1% | 45%±1% |
| | RF | 69%±2% | 68%±2% | 73%±3% | 66%±2% |
| | KNN | 79%±1% | 78%±1% | 79%±1% | 78%±1% |
| | GB | 63%±1% | 63%±2% | 64%±2% | 62%±2% |
| | SVM | 84%±1% | 84%±1% | 84%±1% | 84%±1% |
| | MLP | 69%±0% | 69%±0% | 69%±0% | 69%±0% |
| | DenseNet | 89%±0% | 89%±0% | 89%±0% | 89%±0% |
| Test | SVM | 83% | 83% | 83% | 83% |
| | DenseNet | 89% | 89% | 89% | 89% |

Finally, the results obtained using the audible dataset containing the $h_a(t)$ impulse response in combination with the ultrasonic dataset containing the $h_{ua}(t)$ impulse response are presented in Table 3. Focusing first on the cross-validation, as can be observed, working with both ultrasonic and audible impulse responses produces slightly better results, compared to those presented in Table 1 and Table 2 for $h_{ua}(t)$ and $h_a(t)$, respectively. The algorithm that presents the best performance is the SVM with an 89 % of accuracy and F1-score, followed by the DenseNet with an 88%of accuracy and F1-score. Therefore, we can confirm that in overall the combination of $h_{ua}(t)$ and $h_a(t)$ is moderately beneficial in terms of accuracy.

Table 3: Classification metrics obtained through cross-validation and test using both the ultrasonic and audible databases of impulse responses hua(t) and ha(t). The tested algorithms include classical machine learning techniques (DT, RF, KNN, GB and SVM) and deep neural networks (MLP and DenseNet).

| | Algorithm | Accuracy | F1-score | Precision | Recall |
|---|---|---|---|---|---|
| Cross-validation | DT | 48%±2% | 48%±2% | 47%±2% | 48%±1% |
| | RF | 76%±1% | 76%±2% | 80%±1% | 74%±2% |
| | KNN | 86%±1% | 86%±1% | 87%±1% | 86%±1% |
| | GB | 69%±0% | 69%±0% | 71%±1% | 68%±2% |
| | SVM | 89%±1% | 89%±1% | 90%±1% | 89%±1% |
| | MLP | 75%±0% | 75%±0% | 75%±0% | 75%±0% |
| | DenseNet | 88%±0% | 88%±0% | 88%±0% | 88%±0% |
| Test | SVM | 91% | 91% | 91% | 91% |
| | DenseNet | 88% | 88% | 89% | 88% |

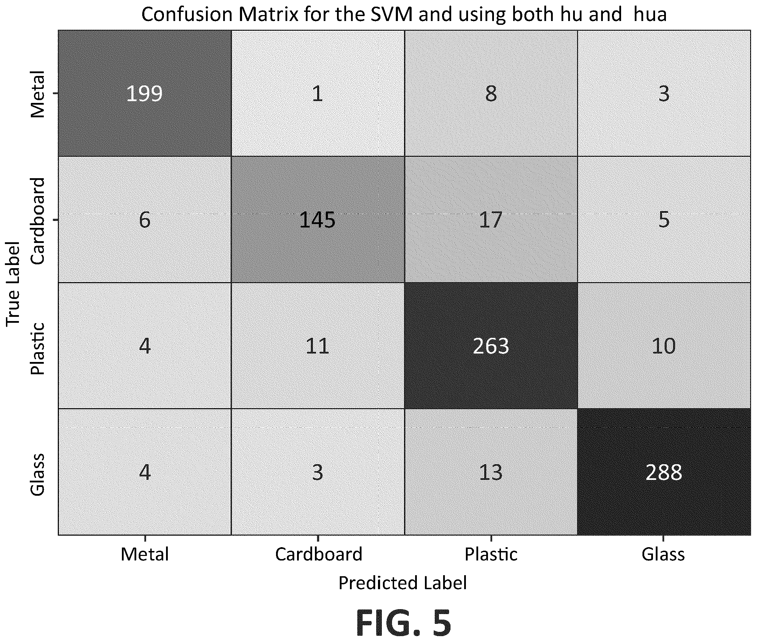

After cross-validation, the final classification results using the testing set for the DenseNet and SVM are again very similar to those obtained with cross-validation. As the SVM is the one that presents the best results among all the configurations, Figure 5 shows the confusion matrix of the testing set when using the SVM algorithm. In overall, the system performs well with the four classes. However, as can be observed, the biggest confusion is between cardboard and plastic, and plastic and glass. Specifically, 17 cardboard samples are wrongly classified as plastic, and 11 plastic samples are wrongly classified as cardboard.

**Claims**

1.　A system (1) for an automatic classification of recyclable containers, the system comprises:

　　• a receptacle (2) for holding a recyclable container (3);

• a computing unit (4);

• a loudspeaker (5), which is connected to the computing unit (4); the loudspeaker (5) is configured to convert a signal from the computing unit (4) into acoustic waves (50, 51) and further configured to emit the acoustic waves (50,51) against the recyclable container (3);

• at least one microphone (7) connected to the computing unit (4), the microphone is configured to capture the acoustic waves (50,51);

wherein the computing unit (4) is configured to:

• generate an ESS signal selected from the group consisting of: a modulated ESS signal to the ultrasonic range, an audible ESS signal to the audible range and an ultrasonic ESS signal to the ultrasonic range;

• send the generated ESS signal to the loudspeaker (5);

• measure the acoustic waves and compute an acoustic impulse response (52) of the recyclable container;

• postprocessing the acoustic impulse response (52) of the recyclable container;

• classify, based on the computed acoustic impulse response (52), the type of recyclable container using a machine learning algorithm, wherein the machine learning algorithm has been trained using a training dataset, the training dataset including acoustic impulse responses of recyclable containers to ultrasonic sound waves and audible sound waves, and corresponding indications of types of recyclable containers issued from a classification test.

2. The system of claim 1, wherein the loudspeaker (5) is an omnidirectional parametric loudspeaker "OPL".

3. The system of claim 1, wherein the loudspeaker (5) is a flat Parametric Array Loudspeaker "PAL".

4. The system of claim 1, wherein the computing unit is further configured to calculate the generated ESS signal according to the following equation:

$$x(t) = \sin\left[K\left(e^{\frac{t}{L}} - 1\right)\right]K,$$

with

$$K = \frac{2\pi f_1 T}{\ln f_2/f_1}; L = \frac{T}{\ln f_2/f_1};$$

wherein:

$f_1$ = initial frequency of the sweep interval;
$f_2$ = final frequency of the sweep interval;
$T$ = time duration of the sweep.

5. The system of claim 4, wherein the computing unit is further configured to add a fade-in signal and/or a fade-out signal to the generated ESS signal.

6. The system of claim 5, wherein the computing unit, for being configured to measure the acoustic waves and compute an acoustic impulse response of the recyclable container, is further configured to:

• compute (24) the audible impulse response $h_a(t)$ as:

$$h_a(t) = y(t) * g_a(t),$$

with $g_a(t)$ being the inverse filter of the ESS computed as:

$$g_a(t) = \tilde{x}(T - t)\left(\frac{f_2}{f_1}\right)^{-t/T}$$

where $\tilde{x}(t)$ is the ESS defined in $x(t) = \sin\left[K\left(e^{\frac{t}{L}} - 1\right)\right] K$, for claim 4, but with the fade in/out already applied;

• compute (25) the ultrasonic impulse response $h_u(t)$ as:

$$h_u(t) = y(t) * g_u(t),$$

with $g_u(t)$ being the inverse filter of the ESS computed as:

$$g_u(t) = \tilde{x}(T - t)\left(\frac{f_2}{f_1}\right)^{-t/T}$$

where $\tilde{x}(t)$ is the generated ESS signal previously defined in $x(t) = \sin\left[K\left(e^{\frac{t}{L}} - 1\right)\right] K$, but with the fade in/out already applied;

• compute simultaneously the audible impulse response $h_a(t)$ and the ultrasonic impulse response $h_u(t)$ as:

$$h_a(t) = y(t) * g_a(t),$$

$$h_u(t) = y(t) * g_{um}(t),$$

where $g_{um}(t)$ is the inverse filter for the ultrasonic range, obtained after modulating $g_a(t)$ to the ultrasonic frequency range.

7. The system of claim 4 or 5, wherein the computing unit, for postprocessing the acoustic impulse response of the recyclable container, when the acoustic impulse response is computed from a signal to the ultrasonic range, is further configured to:

• computing the Fast Fourier Transform (FFT) of the ultrasonic impulse response with N points: $H_u[k] = FFT\{h_u[n]\}$, where k denotes the frequency index and N is set to the effective length of the impulse response; with $N \leq f_S$, being $f_S$ a sampling frequency;
• find the frequency indexes $k_l$ and $k_U$ respectively corresponding to the lowest ultrasonic frequency used, and the one corresponding to the Nyquist frequency as:

$$k_l = \left\lfloor \left(\frac{f_c}{f_s}\right) N \right\rceil \text{ and } k_u = \lfloor N/2 \rfloor;$$

with $\lfloor \cdot \rceil$ being the rounding operator to the nearest integer;
• select frequency samples between $k_l$ and the Nyquist frequency in $H_u$:

$$H'_u[k] = H_u[k + k_l], \quad 0 \leq k \leq k_u - k_l \ ;$$

• generate a new vector that contains information of $H'_u[k]$ plus its symmetrical complex conjugate and make the first sample real, to ensure that the time representation is a real discrete signal:
•

$$H_{ua}[0] = \Re\{H'_u[0]\}$$

•

$$H_{ua}[k] = H'_u[k] \text{ for } 1 \leq k \leq k_u - k_l$$

•

$$H_{ua}[k] = (H'_u [2(k_u - k_l) - k+1])^* \text{ for } k_u - k_l + 1 \le k \le 2(k_u - k_l) ;$$

being $\Re\{x\}$ the real part of x, and x* the complex conjugate of x;
• compute of the final impulse response applying the inverse FFT to $H_{ua}[k]$:

$$h_{ua}[n] = FFT^{-1} \{H_{ua}[k]\} ;$$

• downsample the signal to the audible range.

8. The system of claim 1, wherein the computing unit comprises:

• a microprocessor (40);
• a preamplifier (41) connected to the microphone (7);
• an Analog-to-Digital converter (42) connected to the preamplifier (41) and to the microprocessor (40);
• a Digital-to-Analog converter (44) connected to the microprocessor (40);
• a power amplifier (43) connected to the Digital-to-Analog converter (44) and to the loudspeaker (5).

9. A method for an automatic classification of recyclable containers, the method comprising:

• generating an ESS signal selected from the group consisting of: a modulated ESS signal to the ultrasonic range to work in both the ultrasonic and audible ranges, an audible ESS signal to work in the audible range, and an ultrasonic ESS signal to work in the ultrasonic range;
• converting the generated ESS signal into acoustic waves and emitting the acoustic waves (50, 51) against a recyclable container;
• measuring the acoustic waves (50,51) and computing an acoustic impulse response (52) of the recyclable container (3);
• postprocessing the acoustic impulse response (52) of the recyclable container;
• classifying, based on the computed acoustic impulse response, the type of recyclable container using a machine learning algorithm,

wherein the machine learning algorithm has been trained using a training dataset, the training dataset including acoustic impulse responses of recyclable containers to ultrasonic sound waves and audible sound waves, and corresponding indications of types of recyclable containers issued from a classification test.

10. The method of claim 9, wherein the step of generating an ESS signal comprises calculating the ESS signal according to the following equation:

$$x(t) = \sin\left[K\left(e^{\frac{t}{L}} - 1\right)\right]K,$$

with

$$K = \frac{2\pi f_1 T}{\ln f_2/f_1}; L = \frac{T}{\ln f_2/f_1};$$

wherein:

$f_1$ = initial frequency of the sweep interval;
$f_2$ = final frequency of the sweep interval;
T = time duration of the sweep.

11. The method of claim 10, wherein the step of generating an ESS signal further comprises adding a fade-in signal and/or a fade-out signal to the calculated ESS signal.

12. The method of claim 10, wherein the step of generating an ESS signal further comprises:

• computing the audible impulse response $h_a(t)$ as:

$$h_a(t) = y(t) * g_a(t),$$

with $g_a(t)$ being the inverse filter of the ESS computed as:

$$g_a(t) = \tilde{x}(T - t)\left(\frac{f_2}{f_1}\right)^{-t/T}$$

where $\tilde{x}(t)$ is the ESS defined in $x(t) = \sin\left[K\left(e^{\frac{t}{L}} - 1\right)\right] K$ , for claim 10, but with the fade in/out already applied;
• computing the ultrasonic impulse response $h_u(t)$ as:

$$h_u(t) = y(t) * g_u(t),$$

with $g_u(t)$ being the inverse filter of the ESS computed as:

$$g_u(t) = \tilde{x}(T - t)\left(\frac{f_2}{f_1}\right)^{-t/T}$$

where $\tilde{x}(t)$ is the generated ESS signal previously defined in $x(t) = \sin\left[K\left(e^{\frac{t}{L}} - 1\right)\right] K$ , but with the fade in/out already applied;
• computing simultaneously the audible impulse response $h_a(t)$ and the ultrasonic impulse response $h_u(t)$ as:

$$h_a(t) = y(t) * g_a(t),$$

$$h_u(t) = y(t) * g_{um}(t),$$

where $g_{um}(t)$ is the inverse filter for the ultrasonic range, obtained after modulating $g_a(t)$ to the ultrasonic frequency range.

13. The method of claim 9, wherein the step of postprocessing the acoustic impulse response of the recyclable container when the acoustic impulse response is computed from a signal to the ultrasonic range, further comprises:

• computing the Fast Fourier Transform (FFT) of the ultrasonic impulse response with N points: $H_u[k] = FFT\{h_u[n]\}$, where k denotes the frequency index and N is set to the effective length of the impulse response; with $N \leq f_S$, being $f_S$ a sampling frequency;
• finding the frequency indexes $k_l$ and $k_U$ respectively corresponding to the lowest ultrasonic frequency used, and the one corresponding to the Nyquist frequency as:

$$k_l = \left\lfloor\left(\frac{f_c}{f_s}\right) N\right\rceil \text{ and } k_u = \lfloor N/2 \rfloor;$$

with $\lfloor \cdot \rceil$ being the rounding operator to the nearest integer;
• selecting frequency samples between ki and the Nyquist frequency in $H_u$:

$$H'_u[k] = H_u[k + k_l], \ \ 0 \leq k \leq k_u - k_l ;$$

• generating a new vector that contains information of $H'_u[k]$ plus its symmetrical complex conjugate and make the first sample real, to ensure that the time representation is a real discrete signal:

- 

$$H_{ua}[0] = \Re\{H'_u[0]\}$$

- 

$$H_{ua}[k] = H'_u[k] \text{ for } 1 \leq k \leq k_u - k_l$$

- 

$$H_{ua}[k] = (H'_u[2(k_u - k_l) - k+1])^* \text{ for } k_u - k_l + 1 \leq k \leq 2(k_u - k_l) \text{ ;}$$

being $\Re\{x\}$ the real part of x, and x* the complex conjugate of x;
• computing of the final impulse response applying the inverse FFT to $H_{ua}[k]$:

$$h_{ua}[n] = \text{FFT}^{-1}\{H_{ua}[k]\} \text{ ;}$$

• downsampling the signal to the audible range.

14. A reverse vending machine comprises the system for an automatic classification of recyclable containers of any of the claims 1 to 8.

**FIG. 1**

**FIG. 2**

**FIG. 3**

FIG. 3 (Cont.)

EP 4 786 971 A1

ID = 10

i)

$h_a(t)$

ii)

iii)

$h_{ua}(t)$

iv)

$20 \log_{10}|S_a(t,f)|$

**FIG. 4a**

v)

$20 \log_{10}|S_{ua}(t,f)|$

ID = 16

i)

$h_a(t)$

ii)

$h_{ua}(t)$

iii)

$20 \log_{10}|S_a(t,f)|$

iv)

**FIG. 4b**

$20 \log_{10}|S_{ua}(t,f)|$

v)

i)

ID = 28

ii)

$h_a(t)$

iii)

$h_{ua}(t)$

iv)

$20 \log_{10} |S_a(t,f)|$

**FIG. 4c**

v)

$20 \log_{10} |S_{ua}(t,f)|$

**ID = 53**

i)

$h_a(t)$

ii)

iii)

$h_{ua}(t)$

$20 \log_{10}|S_a(t,f)|$

iv)

**FIG. 4d**

$20 \log_{10}|S_{ua}(t,f)|$

v)

Confusion Matrix for the SVM and using both hu and hua

| True Label \ Predicted Label | Metal | Cardboard | Plastic | Glass |
|---|---|---|---|---|
| Metal | 199 | 1 | 8 | 3 |
| Cardboard | 6 | 145 | 17 | 5 |
| Plastic | 4 | 11 | 263 | 10 |
| Glass | 4 | 3 | 13 | 288 |

FIG. 5

Europäisches
Patentamt

European
Patent Office

Office européen
des brevets

# EUROPEAN SEARCH REPORT

Application Number

EP 25 38 2056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LU GANG ET AL: "One-dimensional convolutional neural networks for acoustic waste sorting", JOURNAL OF CLEANER PRODUCTION, vol. 271, 1 October 2020 (2020-10-01), page 122393, XP093293377, AMSTERDAM, NL ISSN: 0959-6526, DOI: 10.1016/j.jclepro.2020.122393 * the whole document * | 1-14 | INV. G01N29/04 G01N29/34 G01N29/44 |
| A | YOO TAEYOUNG ET AL: "Dual Image-Based CNN Ensemble Model for Waste Classification in Reverse Vending Machine", APPLIED SCIENCES, vol. 11, no. 22, 22 November 2021 (2021-11-22), page 11051, XP093097622, DOI: 10.3390/app112211051 * the whole document * | 1,9 | |
| A | CN 113 772 290 B (BEIJING SOUNDAL TECH CO LTD) 31 March 2023 (2023-03-31) * abstract * * paragraph [0314] * | 1,9 | TECHNICAL FIELDS SEARCHED (IPC)<br><br>G01N<br>B65F |

The present search report has been drawn up for all claims

| Place of search | Date of completion of the search | Examiner |
|---|---|---|
| Munich | 9 July 2025 | Uttenthaler, Erich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 38 2056

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2025

| Patent document cited in search report | Publication date | Patent family member(s) | Publication date |
|---|---|---|---|
| CN 113772290 B | 31-03-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. YOO** ; **S. LEE** ; **T. KIM**. Dual image-based cnn ensemble model for waste classification in reverse vending machine. *Applied Sciences*, 2021, vol. 11 (22), 11051, https://doi.org/10.3390/app112211051
- **G. LU** ; **Y. WANG** ; **H. YANG** ; **J. ZOU**. One-dimensional convolutional neural networks for acoustic waste sorting. *Journal of Cleaner Production*, 2020, vol. 271, 122393, https://doi.org/10.1016/j.jclepro.2020.122393
- **M. K. KORUCU** ; **ÖZGÜR KAPLAN** ; **O. BÜYÜK** ; **M. K. GÜLLÜ,**. An investigation of the usability of sound recognition for source separation of packaging wastes in reverse vending machines. *Waste Management*, 2016, vol. 565, 46-52
- **T. MUNAKA** ; **F. SAMIEA** ; **L. BAUER** ; **J. HENKEL**. Improved feature extraction method for sound recognition applied to automatic sorting of recycling wastes. *Journal of Information Processing*, 2020, vol. 28, 658-665, https://doi.org/10.2197/ipsjjip.28.658

- **O. I. PUNCH** ; **R. MARHAUG** ; **S. KOHTALA** ; **M. STEINERT,**. Detecting glass and metal in consumer trash bags during waste collection using convolutional neural networks,. *Waste Management*, 2021, vol. 119, 30-38, https: //doi.org/10.1016/j.wasman.2020.09.032
- **P. MESTRE** ; **C. SERODIO** ; **A. AZEVEDO** ; **H. CORREIA** ; **I. BENTES** ; **C. COUTO**. Filling rate assessment of recycling containers using ultrasonic transducers,. *Measurement*, 2011, vol. 44 (6), 1084-1095, https://doi.org/10.1016/j.measurement.2011.03.014
- **K. OHTANI** ; **M. BABA**. Prototype of mobile super directional loudspeaker, 8. *2006 IEEE Instrumentation and Measurement Technology Conference Proceedings*, 2006
- **J. PARK,** ; **M.-H. KIM** ; **D.-G. CHOI**. Correspondence learning for deep multimodal recognition and fraud detection. *Electronics*, 2021, vol. 10 (7), 800, https://doi.org/10.3390/electronics10070800